(19) **Europäisches Patentamt / European Patent Office / Office européen des brevets**

(11) **EP 1 476 247 B1**

(12) **EUROPEAN PATENT SPECIFICATION**

(45) Date of publication and mention
of the grant of the patent:
**15.04.2009 Bulletin 2009/16**

(51) Int Cl.:
**B01D 61/44** (2006.01)     **B01D 61/50** (2006.01)
**B01D 63/08** (2006.01)     **C02F 1/469** (2006.01)

(21) Application number: **03713574.6**

(22) Date of filing: **21.02.2003**

(86) International application number:
**PCT/US2003/005185**

(87) International publication number:
**WO 2003/072229 (04.09.2003 Gazette 2003/36)**

(54) **ELECTRODIALYSIS STACK WITH MULTI-PATH SPLIT CELL SPACER**

ELEKTRODIALYSESTAPEL MIT GETEILTER MEHRWEGEZELLE

EMPILEMENT D'ELECTRODIALYSE COMPRENANT DES SEPARATEURS A CELLULES FRACTIONNEES MULTIVOIES

(84) Designated Contracting States:
**AT BE BG CH CY CZ DE DK EE ES FI FR GB GR HU IE IT LI LU MC NL PT SE SI SK TR**

(30) Priority: **21.02.2002 US 80302**

(43) Date of publication of application:
**17.11.2004 Bulletin 2004/47**

(73) Proprietor: **EET Corporation**
**Knoxville, TN 37932 (US)**

(72) Inventors:
• **SFERRAZZA, Alois**
**Knoxville, TN 37922 (US)**

• **SCHMIDT, Ernst**
**Knoxville, TN 37922 (US)**

(74) Representative: **Grünecker, Kinkeldey, Stockmair & Schwanhäusser Anwaltssozietät**
**Leopoldstrasse 4**
**80802 München (DE)**

(56) References cited:
**EP-A- 0 853 972**     **EP-A- 0 853 972**
**WO-A-95/32052**     **WO-A-95/32052**
**US-A- 5 034 124**     **US-A- 5 066 375**
**US-A- 5 066 375**     **US-A- 5 868 930**
**US-A- 5 868 930**     **US-A- 6 117 297**
**US-B1- 6 274 020**

**Description**

The present invention relates to an electrodialysis system in accordance with the preamble of claim 1, and to a cell stack for use in this system.

There are presently a number of systems for treating and recycling aqueous and aqueous/organic waste streams on the market. Present state of the art systems, including de-ionization methods that are available to industrial waste stream generators, are deficient in their ability to consistently and economically produce a cleansed fluid of sufficient quality that can be continuously recycled and reused, especially in the case of small to medium volume liquid waste generation. The initial high cost of purchasing many of these systems is beyond the economic resources of many businesses, thus prohibiting cost-effective recycling for environmental compliance or beneficial reuse.

Multi-cell electrodialysis stacks are normally built up of membrane sheets separated from each other by suitable gaskets. For efficient separations, the distance (gap) between the sheets is as small as possible. In most designs, a spacer is introduced between the individual membrane sheets, both to assist in supporting the membrane and to help control the liquid flow distribution. The stacks for most electrodialysis processes are assembled in the same fashion as a plate-and-frame filter press, the gaskets corresponding to the frames and the membrane sheets corresponding to the plates. The manifolds that are needed to distribute the process fluids to the various compartments or channels are formed by ingenious patterns of mating holes and slots punched in the gaskets and sometimes in the membranes themselves, prior to assembly of the stack. Several different gasket and spacer materials and arrangements and channel geometries have been utilized or proposed.

In typical electrodialysis systems, the flow pattern within each compartment (i.e., between any two successive membranes) is determined by the configuration of the spacer element used between the membranes. Two distinctively different flow arrangements are typically used. One is known as the tortuous-path design; the other makes use of the sheet-flow principle. The most serious design problem for both flow arrangements for multi-membrane and multi-cell stacks is that of assuring uniform fluid flow to the various compartments and effective transport of the ions to the membrane surfaces. These difficulties are the major obstacles to economical demineralization of brackish liquids.

In particular, reducing concentration polarization is one of the most important design issues for electrodialysis. Concentration polarization is the reduction of ion concentrations near the membrane surface compared to those in the bulk solution flowing through the membrane compartment. With substantial concentration polarization, electrolytic water splitting in order to provide the requisite electric current carriers through the membranes occurs due to the deficiency of solute ions adjacent to the membranes that can carry the current. This water splitting is extremely detrimental to electrodialysis efficiency. The tendency of concentration polarization to take place at the surface of the membranes is due to the hydrodynamic characteristic of channel flow, in which there is a central turbulent core of flow bounded by thin viscous boundary layers adjacent to the confining surfaces. These viscous boundary layers impose a resistance to the passage of ions much greater than that of a layer of like thickness in the turbulent core, and hence increase the likelihood of polarization at the membrane surfaces. Polarization is objectionable not only from the standpoint of the inefficient increase in energy consumption, but also the change of pH of the concentrate stream as a result of water splitting, which tends to cause scale deposition.

When dealing with fluids with very low total dissolved solids (TDS), back diffusion can take place. Back diffusion occurs when the ion concentration in the concentrate stream is substantially higher than the ion concentration in the de-mineralized stream. The result is that some of the ions from the concentrate stream diffuse back through the membrane, against the force of the DC potential, into the de-mineralized stream.

The number of cells in a stack is limited mainly by the practical considerations of assembly and maintenance requirements. Since the failure of a single membrane can seriously impair stack performance, the necessity to be able to disassemble and reassemble a stack to replace membranes, and the necessity to be able to perform this quickly and easily, effectively limits the number of membranes that can be practically utilized in a stack. As a result, it is often desirable to use several smaller modular-size stacks rather than one large one. This problem has been attacked by using several small subassemblies or packs containing about 50 to 100 cell pairs (CP), and arranging as many as 10 of these packs in series in a single clamping press. A single set of electrodes may be used for the entire assembly (stack) or several electrodes may be used to provide electric staging. However, use of single electrodes for larger assemblies typically causes end-cell heating which results in rapid membrane deterioration. It is also known in the art to use nano-filtration as a pretreatment prior to electrodialysis. However, nano-filtration has certain drawbacks. Namely, responsible disposal of the reject produced by the nano-filtration presents additional problems. A need for further reduction of aqueous salts and a method to treat/recover the NF reject exists.

An electrodialysis system comprising a plurality of generally planar split-cell spacers and membranes arranged therebetween is described in US-A-5,066,375. The spacers and membranes are stacked and attached to each other by common means.

WO 95/32052 describes an electrodeionisation apparatus comprising a plurality of membranes and spacers stacked between end plates. The end plates are provided with tie-bar holes for attaching the end plates to each other by compressing the gasket and membrane therebetween.

US-A-5,868,930 describes the use of alternating gaskets and filters in a plate and frame arrangement with bolts along the outer edges holding the assembly together.

The present invention serves to expand the possible applications of electrodialysis in that it represents an efficient, small scale electrodialysis system with a configuration allowing cost-effective small-scale applications, while making the large scale applications even more cost-competitive than they currently are.

A unique gasket design reduces hydraulic pressure drop across the cell stack assembly by eliminating narrow inlet/outlet manifold cutouts inherent with conventional designs. The reduction of hydraulic pressure permits the use of higher flow rates that increase turbulence and further reduces concentration polarization, as well as thinner membranes, resulting in improved desalting efficiency, especially for sparingly conductive solutions, and also less sensitivity to the presence of suspended matter.

What is needed is a novel multiple split cell design that can be operated in parallel as a roughing de-mineralizer (or operated in a batch recirculation mode) or operated in series allowing for single-pass continuous flow. When operated in the series mode, the split cell design permits separate voltage and flow control when a higher purity fluid is desired. The split cell design permits separate cell control of concentrate stream salinity content. The roughing cell may be operated with a higher concentrate stream TDS, with the salinity of the polish cell concentrate stream correspondingly reduced to the salinity content of the de-mineralized stream. This prevents back diffusion and allows for efficient removal of ions in feed water of low TDS. In short, the split cell design incorporates the benefits of hydraulic and electrical staging without the inherent complexity and expense of commercial electrodialysis systems. The split cell design minimizes the voltage potential across the stack, thereby reducing end-cell heating that leads to membrane deterioration.

Stack assembly cost is reduced as a result of the novel split cell/gasket geometry according to claim 1. A reduced number of expensive machined components are required. Simpler and lighter components lower material costs for a given membrane area. Inexpensive center bolts provide an alternative to typical hydraulic force application arrangements, which also improves the uniformity of the clamping force distribution on the gasket area. Threaded bolts also reduce assembly labor time, i.e., it is easier to hold the configuration in place and also facilitate change-out of membranes when they are spent, as the cell geometry reduces concentrated point stresses as is found inherent with some conventional stack assemblies.

Based on Faraday's Law, the efficiency of the current being used to transfer salts in an electrodialysis (ED) membrane stack can be calculated. Theoretically, for every 26.8 ampere-hours, one-gram equivalent of salt will be transferred in each cell pair. In such a case, the process would be 100 percent efficient. Current efficiencies of over 80% indicate that >80% of the total current applied to the membrane stack is effectively transferring ions from the demineralized to the concentrate streams. The 20% unaccounted for can be attributed to several factors, among which are cross leakage, resistance heating and back diffusion. Back diffusion occurs when the ion concentration in the concentrate (C) stream is substantially higher than the ion concentration in the demineralized (D) stream. The result is that some of the ions from the concentrate stream diffuse back through the membrane, against the force of the DC potential, into the demineralized stream. Typically, current efficiency of the membrane stack is reduced when the C to D concentration ratio exceeds a certain ratio depending on the type of membrane used.

In many parts of the world, obtaining an adequate supply of quality water is becoming an increasingly difficult problem. Much care must be taken in utilizing the available supplies. Contributing to this condition are such factors as limited reserves of raw water, high cost of waste disposal, and the high cost of well pumping and raw water treatment systems. In light of this situation, water recovery (-<effluent/ influent> * 100%) has become an important consideration when specifying desalination systems.

What is further needed is an apparatus and method that allows for the cost-effective arrangement of two or more split membrane cells that enables the ingenious arrangements of plumbing for optimizing deionization processing, while reducing capital, operating and maintenance costs.

A dialysis stack is provided in which each generally planar gasket defines a first cell and a second cell. A membrane is located adjacent to each side of each gasket. A turbulence spacer is located within each cell. Each cell is provided with an inlet and an outlet to provide fluid access into and out of each cell. Fluid flows sequentially through the two cells defined in each gasket. Preferably; the fluid flows through a plurality of first cells defined by a plurality of spacers and then flows through a plurality of second cells defined in the plurality of spacers. Separate anodes and cathodes provide electrical energy to the two parallel sets of first cells and second cells. Separate rectifiers can be used to apply specific electric potential across the first set of cells and second cells when operated in series, or a single rectifier can power both the first and second cell sets when operated in parallel. A system of bolts extending through parallel compression plates are used to secure the plurality of spacers and interleaved membranes in register to define conduits expending between the plurality of cells.

The electrodialysis stack is included in an electrodialysis system. The system includes a mixing tank for the solution being processed. Mixed solution is passed through filters for removing particulate matter and potential precipitants. The filtered solution is collected in a dilute tank. Concentrated fluid is collected in a concentrate tank. Electrolyte is provided from an electrolyte tank to an anode chamber and to a cathode chamber. The anode chamber and the cathode chamber have an electrically conductive fluid connection through the cell stack. The membranes alternate between anion exchange membranes and cation exchange membranes. The cells alternate between concentrate stream cells and dilution stream cells.

BRIEF DESCRIPTION OF THE SEVERAL VIEWS OF THE DRAWINGS

The above-mentioned features of the invention will become more clearly understood from the following detailed description of the invention read together with the drawings in which:

Figure 1 is a laterally exploded view of a cell stack embodying various of the features of the present invention;

Figure 2 is a plan view of a cell stack embodying various features of the present invention;

Figure 3 is a side elevation view of a cell stack embodying various features of the present invention;

Figure 4 is an end elevation view of a cell stack embodying various features of the present invention;

Figure 5 is an elevation view of an electrodialysis system embodying various features of the present invention;

Figure 6 is a flow diagram of an electrodialysis system embodying various features of the present invention;

Figure 7a is a schematic diagram of split cell spacer having two cells arranged in series;

Figure 7b is a schematic diagram of split cell spacer having two cells arranged in parallel;

Figure 7c is a schematic diagram of split cell spacer having three cells arranged in series;

Figure 7d is a schematic diagram of split cell spacer having three cells arranged in parallel;

Figure 7e is a schematic diagram of split cell spacer having four cells with two parallel cells arranged in series with two parallel cells;

Figure 7f is a schematic diagram of split cell spacer having four cells arranged in series;

Figure 7g is a schematic diagram of split cell spacer having four cells with three cells arranged in parallel arranged in series with a single polish cell;

Figure 8 is a schematic diagram of one method of utilizing nanofiltration in conjunction with the split cell electrodialysis stack of the present invention;

Figure 9 is a schematic diagram of a continuous countercurrent concentration system in which a plurality of split cell electrodialysis stacks are arranged serially; and

Figure 10 is a schematic diagram illustrating a batch type electrodialysis system utilizing the split cell electrodialysis stack of the present invention.

DETAILED DESCRIPTION OF THE INVENTION

Referring to the drawings, wherein similar reference numbers denote similar elements throughout the several drawings, there are disclosed a method and an apparatus for electrodialysis treatment of a fluid in which a salt is dissolved. One example of such a fluid is used antifreeze, which can be cleaned and recycled in accordance with the present invention. Other applications include recycling of industrial and healthcare laundry waste water and recycling of cooling tower blowdown. Those skilled in the art will recognize that there are numerous other applications for electrodialysis treatment of fluids in which a salt is dissolved.

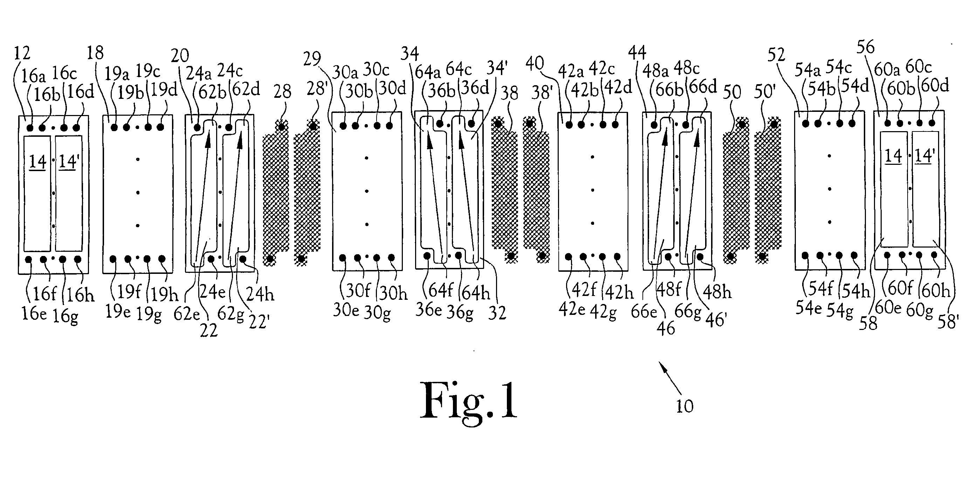

In Figure 1 there is illustrated one embodiment of an electrodialysis cell stack **10,** exploded laterally. At one end is an electrode stream spacer **12** defining two rectangular apertures **14** and **14'.** In the depicted embodiment the electrode stream spacer is approximately fourteen inches by approximately twenty-four inches, though it will be recognized that various sizes may be used. Also defined in the electrode stream spacer 12 are eight conduit apertures **16a, 16b, 16c, 16d, 16e, 16f, 16g** and **16h.**

Adjacent to the electrode stream spacer **12** is an anion exchange membrane **18,** many of which are well known in the art. One commercially available material is Neosepta AFN produced by Tokuyama Corporation. Those skilled in the art will recognize that other membranes are available in the industry. The anion exchange membrane **18** is shaped and sized substantially identically to the electrode stream spacer **12** and includes conduit apertures **19a-h** in register with the conduit apertures **16a-h** defined in the electrode stream spacer **12.**

Adjacent to the anion exchange membrane **18** is a concentrate split cell spacer **20** defining two apertures **22** and **22'.** Each of the apertures **22** and **22'** has the shape of an abbreviated rectangle in which two squares have been removed from diagonally opposed corners and all corners have been rounded. Conduit apertures **24a, 24c, 24e** and **24h** are defined in the concentrate split cell spacer. The concentrate split cell spacer **20** is shaped and sized substantially identical to the electrode stream spacer **12.** The aperture **22** is in register with the rectangular aperture **14** and the aperture **22'** is in register with the rectangular aperture **14'.**

A concentrate turbulence spacer **28** is located within the aperture **22** and a concentrate turbulence spacer **28'** is located within the aperture **22'.** Each of the concentrate turbulence spacers **28** and **28'** are formed from a mesh to maintain turbulence within the apertures **22** and **22'** as concentrate fluid passes through the apertures **22** and **22'.**

Adjacent to the concentrate turbulence spacer **28** is a cation exchange membrane **29,** many of which are well known in the art. One commercially available material is Neosepta CMX produced by Tokuyama Corporation. The cation exchange membrane **29** is shaped and sized substantially identical to the electrode stream spacer **12** and includes conduit apertures **30a-h** in register with the conduit apertures **16a-h** defined in the electrode stream spacer **12.**

Adjacent to the cation exchange membrane **29** is a dilution stream split cell spacer **32** defining two apertures **34** and **34'.** Each of the apertures **34** and **34'** has the shape of an abbreviated rectangle in which two squares have been removed from diagonally opposed corners and all corners have been rounded. The apertures **22** and **22'** are mirror images of the apertures **34** and **34'.** Conduit apertures **36b, 36d, 36e** and **36g** are defined in the dilution stream split cell spacer **32.** The aperture **34** is in register with the rectangular aperture **14** and the aperture **34'** is in register with the rectangular aperture **14'** to provide electrically conductive fluid connection to the apertures **14** and **14',** respectively.

A dilution stream turbulence spacer **38** is located within the aperture **34** and a dilution stream turbulence spacer **38'** is located within the aperture **34'.** Each of the dilution stream turbulence spacers **38** and **38'** is formed from a mesh to maintain constant turbulence within the apertures **34** and **34'** as dilution fluid passes through the apertures **34** and **34'.**

Adjacent to the dilution stream turbulence spacer **38** is an anion exchange membrane **40,** which is identical to anion exchange membrane **18.** The anion exchange membrane **40** defines conduit apertures **42a-h** in register with the conduit apertures **16a-h** defined in the electrode stream spacer **12.**

Adjacent to the anion exchange membrane **40** is a concentrate split cell spacer **44** defining two apertures **46** and **46'.** The concentrate split cell spacer is identical to the concentrate split cell spacer **20** and defines conduit apertures **48a, 48c, 48f** and **48h.** The aperture **46** is in register with the rectangular aperture **14** and the aperture **46'** is in register with the rectangular aperture **14'** to provide electrically conductive fluid connection to the apertures **14** and **14',** respectively.

A concentrate turbulence spacer **50** is located within the aperture **46** and a concentrate turbulence spacer **50'** is located within the aperture **46'.** Each of the concentrate turbulence spacers **50** and **50'** is formed from a mesh to maintain constant turbulence within the apertures **46** and **46'** as concentrate fluid passes through the apertures **46** and **46'.**

Adjacent to the concentrate turbulence spacer **50** is a cation exchange membrane **52,** many of which are well known in the art. The cation exchange membrane **52** is shaped and sized substantially identically to the cation exchange membrane **29** and includes conduit apertures **54a-h** in register with the conduit apertures **16a-h** defined in the electrode stream spacer **12.**

Adjacent to the cation exchange membrane **52** is an electrode stream spacer **56** defining two rectangular apertures **58** and **58'.** The electrode stream spacer **56** is substantially identical to the electrode stream spacer **12.** Also defined in the electrode stream spacer **56** are eight conduit apertures 60a-h, which are in register with the conduit apertures **16a-h** respectively.

A first end section **62b** of the aperture **22** overlays the conduit apertures **19b** and **30b** to cooperatively define a concentrate outlet port for the aperture **22.** A diagonally opposed second end section **62e** overlays conduit apertures **19e** and **30e** to cooperatively define a concentrate inlet for the aperture **22.** A first end section **62d** of the aperture **22'** overlays the conduit apertures **19d** and **30d** to cooperatively define an outlet port for the aperture **22'.** A diagonally opposed second end section **62g** of the aperture **22'** overlays the conduit apertures **19g** and **30g** to cooperatively define an inlet port for the aperture **22'.**

A first end section **64a** of the aperture **34** overlays the conduit apertures **30a** and **42a** to cooperatively define a dilution outlet port for the aperture **34.** A diagonally opposed second end section **64f** overlays conduit apertures **30f** and **42f to** cooperatively define a dilution inlet for the aperture **34.** A first end section **64c** of the aperture **34'** overlays the conduit apertures **30c** and **42c** to cooperatively defme an outlet port for the aperture **34'.** A diagonally opposed second end section **64h** of the aperture **34'** overlays the conduit apertures **30h** and **42h** to cooperatively define an inlet port for the aperture **34'**.

A first end section **66b** of the aperture **46** overlays the conduit apertures **42b** and **54b** to cooperatively define a concentrate outlet port for the aperture **46**. A diagonally opposed second end section **66e** overlays conduit apertures **54e** and **42e** to cooperatively define a concentrate inlet for the aperture **46**. A first end section **66d** of the aperture **46'** overlays the conduit apertures **42d** and **54d** to cooperatively define an outlet port for the aperture **46'**. A diagonally opposed second end section **66g** of the aperture **46'** overlays the conduit apertures **42g** and **54g** to cooperatively define an inlet port for the aperture **46'**. A plurality of this arrangement of membranes and gaskets could be stacked depending upon the desired amount of membrane surface area for a given application.

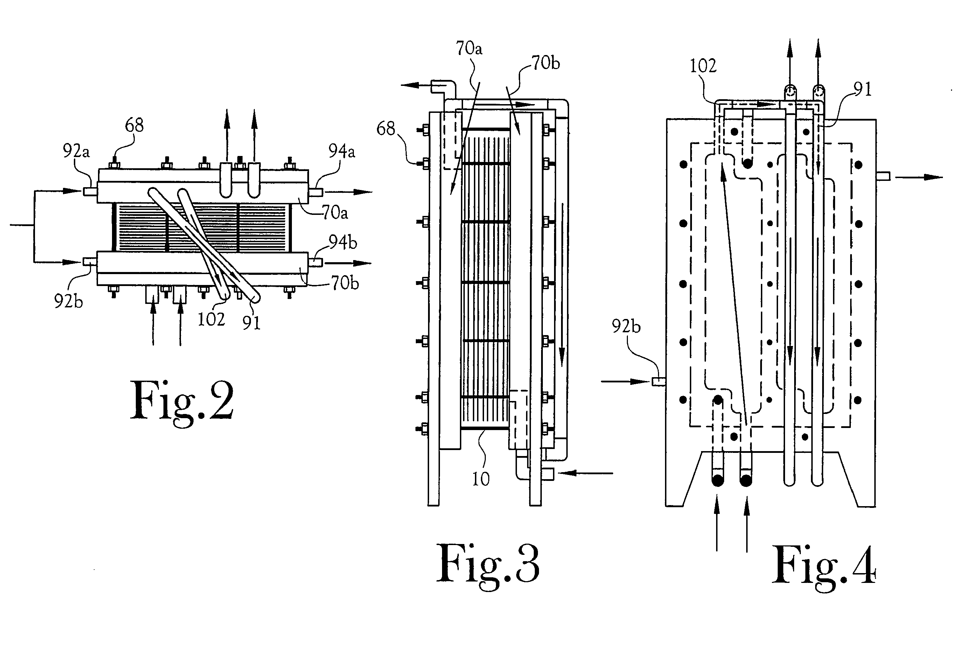

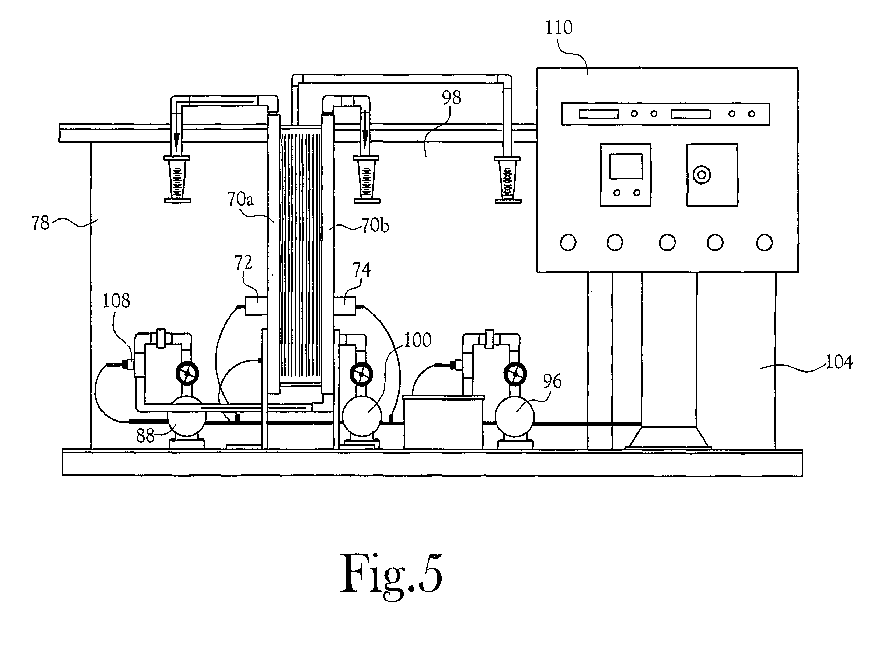

In Figures 2 and 3 the cell stack **10** is depicted as it is mounted with threaded bolts **68** between an opposed pair of electrolyte flow distribution endplates **70a** and **70b**. Preferably, the bolts **68** are coated with a plastic or other high electrically resistant material. The threaded bolts **68** are arranged around the periphery of the end plates **70a** and **70b** and also extend through the space between the split cells as shown in Figure 4. As depicted in Figure 5, a cathode **72** extends through the endplate **70a** and an anode **74** extends through the endplate **70b**. A rectifier **75** applies a potential between the cathode **72** and the anode **74**. An electrolyte solution supplied to the endplates **70a** and **70b,** a concentrate stream sequentially supplied to the apertures **22, 22', 46'** and **46** and a dilution stream sequentially supplied to the apertures **34** and **34'** provide electrically conductive fluid connection between the cathode 72 and the anode **74**.

In one embodiment, the split-cell spacers utilize EPDM (ethylene propylene diene terpolymer) sold under the name Nordel by E. I. Du Pont de Nemours and Company. Those skilled in the art will recognize that other gaskets and gasket materials are available in the art. When assembled and secured with threaded bolts **68** no glue or other adhesive is required between the membranes and the spacers.

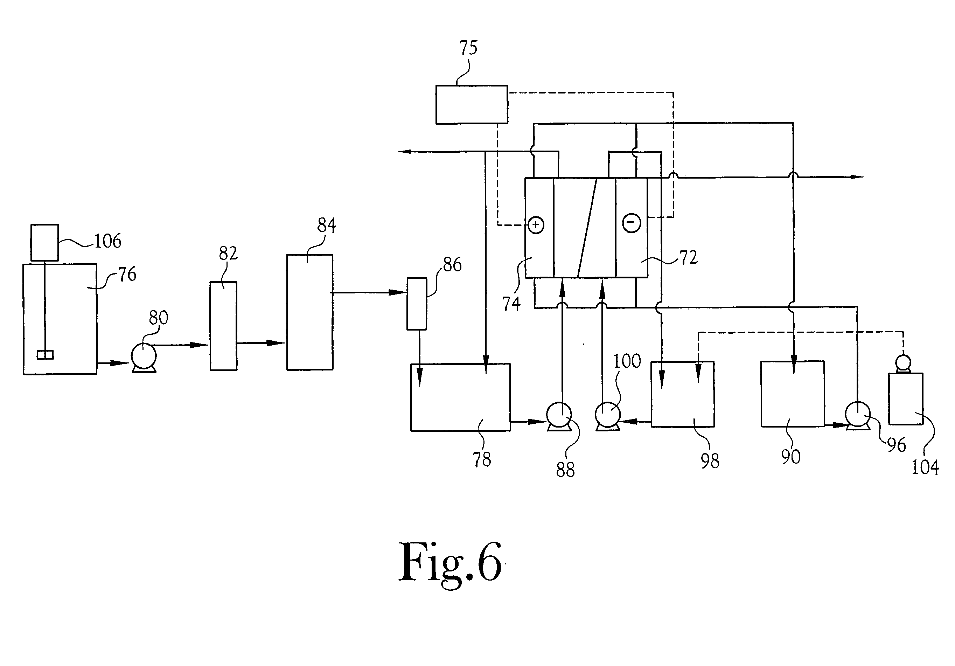

Referring now to Figure 6, there is depicted a flow diagram of an electrodialysis system adapted for using the cell stack described hereinabove. The system is portable and may be easily moved to locations where fluids require cleaning. For example, used antifreeze is stored in a mixing tank 76, where it is mixed with a metal reducing agent to precipitate metals dissolved in the fluid. The mixing tank **76** is in flow communication with a desalinated tank **78** through a filter pump **80,** a first 1 micron filter **82,** a carbon adsorber **84** and a second 1 micron filter **86**.

The desalinated tank **78** is in flow communication by conduits, through a pump **88** to the conduit apertures **60f, 54f, 48f** and **42f** (in series) to enter the inlet of aperture **34**. The outlet of the aperture **34** is connected in flow communication with the inlet of the aperture **34'** by a conduit **91**. The outlet of the aperture **34'** is in flow communication with the desalinated tank by conduit apertures **30c, 24c, 19c** and **16c**.

An electrolyte is stored in an electrolyte rinse tank 90, which is connected through conduits to the inlets **92a** and **92b** of the end plates **70a** and **70b,** respectively. The outlets **94a** and **94b** from the endplates **70a** and **70b,** respectively, are connected back to the electrolyte rinse tank **90**. A pump **96** circulates the electrolyte.

A pump **100** sends concentrated brine from a concentrate brine tank **98** through the conduit apertures **60e** and **54e** to enter the inlet of aperture **46**. From the outlet of the aperture 46 the brine is directed through the conduit apertures **42b, 36b** and **30b** to the outlet of the aperture **22**. From the outlet of the aperture **22** the brine is directed through the conduit apertures **19b** and **16b,** a conduit **102,** and conduit apertures **60g** and **54g** to the inlet of aperture **46'**. From the outlet of the aperture **46'** the brine is directed through the conduit apertures **42d, 36d** and **30d** to the outlet of the aperture **22'**. From the outlet of the aperture **22'** the brine is directed back to the concentrated brine tank **98** via the conduit apertures **19d** and **16d**. The concentrated brine tank **98** is in flow communication with a concentrate neutralization tank **104**.

In operation, electrolyte is circulated between the electrolyte rinse tank **90** and the end plates 70a and **70b**. The pH of the electrolyte is monitored for maintenance in a generally constant range. As required, neutralization acid may be added from the tank **104**.

Concentrated brine is circulated from the tank **98,** sequentially through the apertures **46, 22, 46'** and **22'** and then back to the tank **98**. The concentration of the brine is monitored for maintenance in a generally constant range. As required, water may be added to the tank **98**. A "feed and bleed" mode of operation is provided for make-up water. The pH is also monitored and controlled.

The fluid to be cleaned, such as used antifreeze, is entered into the mixing tank **76** where a stirrer **106** maintains agitation of the fluid with a metal reducing agent. The fluid is then pumped through the filter **82,** the carbon adsorber **84** and the filter **86** to the desalinated tank **78**. The fluid is circulated from the desalinated tank **78,** sequentially through the apertures **34** and **34',** and then back to the desalinated tank. As is well recognized in the field of electrodialysis, the potential applied between the cathode **72** and anode **74** induce the ions of salts in the fluid to pass through the membranes into the brine solution passing through the adjacent aperture, thus increasing the concentration of salts in the brine solution and reducing the concentration of salts in the treated fluid. By cycling the fluid repeatedly through the apparatus, the concentration of salts can be reduced to the desired minimal level. A conductivity sensor 108 monitors the fluid as it leaves the pump 88 to determine when a satisfactory level has been reached. A control panel 110 provides visual readouts and controls for operating the system.

EXAMPLE 1

| Parameter | Conventional Multi-Compartment Stack | Multi-path Split Cell (Operated in parallel) |
|---|---|---|
| Glycol content %w. | 40.0 | 40.0 |
| Glycol Retention % | 91.8 | 99.9 |
| Starting conductivity ($\mu$Mho/cm) | 3,800 | 3,800 |
| Finish Conductivity ($\mu$Mho /cm) | 1,000 | 1,000 |
| Cell pair Volage (V) | 1.0 | 1.0 |
| Membrane type | Conventional | Conventional |
| Solution temperature (° F) | 76 | 76 |
| Production Rate ($m^3$/day/$m^2$ of membrane) | 0.44 | 2.0 |
| Gasket Material | EPDM | EPDM |

(The anion exchange membrane used was Neosepta AFN produced by Tokuyama Corporation. The cation exchange membrane used was Neosepta CMS produced by Tokuyama Corporation. Those skilled will recognize that other commercially available membranes could be utilized.)

As seen in Example 1, the multi-path split cell system of the present invention, which is substantially less costly to produce than a state-of-the-art conventional multi-compartment stack, operated at a production rate over four times greater than a conventional multi-compartment stack.

Studies indicate that the configuration of the invention is a substantial improvement over traditional designs. Example 2 shows the production rate and typical % removal of NaCl for the current invention; those skilled in the art will recognize these values allow the invention to be economically competitive for a variety of feeds. Example 3 shows typical membrane area and energy requirements for desalination using traditional ED stack designs contrasted with the performance of the current invention. Those skilled in the art will recognize that the improved design of the current invention results in a stack requiring significantly less membrane area and that is significantly more energy efficient.

**Example 2**

| NaCl Feed Concentration | Production Rate ($m^3$/$m^2$ day) | % NaCl Removal |
|---|---|---|
| 1.65 g/L | 5.74 | 91 |
| 16.5 g/L | 1.50 | 99 |

**Example 3**

| A. Membrane Area ($m^2$) for 1 $m^3$/day Capacity* | | | |
|---|---|---|---|
| NaCl Feed Concentration | Traditional Designs** | Split cell | % Reduction |
| 1 g/L | 0.3 | 0.17 | 42% |
| 10 g/L | 1.2 | 0.67 | 44% |
| B. Energy Requirements (kw-hr/$m^3$ product)* | | | |
| NaCl Feed Concentration | Traditional Designs** | Split Cell | % Reduction |
| 1 g/L | 1.2 | 0.26 | 78% |

(continued)

| B. Energy Requirements (kw-hr/m$^3$ product)* | | | |
|---|---|---|---|
| NaCl Feed Concentration | Traditional Designs** | Split Cell | % Reduction |
| 10 g/L | 3.4 | 2.67 | 21% |

*For a product concentration of 500 ppm TDS.
**Source: Strathmann, H., "Design and Cost Estimates", in Membrane Handbook, pp. 246- 254, W.S.W. Ho and K.K. Sirkar, eds., Van Nostrand Reinhold, New York (1992).

An important variable describing an ED system is the current utilization efficiency. The current utilization efficiency is primarily influenced by the ED stack design and flow velocities but also to a lesser extent by the concentration and composition of the feed stream. For a given ED stack (gasket design, spacer design, etc.) and feed stream, the current efficiency is:

$$(1) \qquad \xi = \frac{z\,F\,Q_f\,(C^d_{inlet} - C^d_{outlet})}{N\,I} \times 100\%$$

where

ξ = current utilization efficiency, %
$z$ = charge of ion
$F$ = Faraday's constant, 96,485 Amp-s/mol
$Q_f$ = diluate flow rate, L/s
$C^d_{inlet}$ = diluate ED cell inlet ion concentration, mol/L
$C^d_{outlet}$ = diluate ED cell outlet ion concentration, mol/L
$N$ = number of cell pairs
$I$ = applied current, Amps.

In an ED system, the ratio of concentrate stream, ("C"), to demineralized stream, ("D"), concentrations affects current utilization efficiency as seen in Chart 1. Optimum C/D ratios are dependent on the feed salinity, the desired quality of the demineralized stream and flow velocities of the diluate and concentrate solutions. The recirculation of the concentrate stream is called concentrate recycle. The flow rate of the concentrate and the demineralized water through the membrane stack is essentially equal since there must be little pressure difference between the two streams. In the simplest case, this equal flow would lead to a recovery of demineralized water equal to only half of the saline fluid being treated. In almost all ED and ED reversal (EDR) plants much of the effluent concentrate (with some additional feed water) is recycled to the concentrate stream, thereby conserving water. This concentration level is controlled by sending a fraction of the concentrate stream to waste and adding an equal volume of new feed water to this recycle stream. High current efficiencies must as a result be sacrificed at the expense of high recovery. The present invention indicates that relatively high current efficiencies can be maintained even for significant C/D ratios.

## Chart 1

Current Efficiency vs Actual C/D Ratio - Lab Scale

Those skilled in the art will recognize that current utilization efficiencies should be >70% for efficient use of ED for desalting typical brackish water feeds, and that current utilization decreases as the product water concentration decreases. Chart 2 shows that the invention provides excellent current utilization efficiencies (>90%) over a wide range of product water concentrations. The figure also shows that good current utilizations are achieved even when producing high quality product (<5 mg/L Cl⁻). Also, studies indicate that the invention is capable of producing a product with extremely low conductivity levels (down to as low as 2.6 μMho/cm). Those skilled in the art will recognize that this represents a substantial improvement compared to traditional ED designs, which are typically limited to product with conductivities >30 μMho/cm. As a result, the invention represents a new pretreatment option for production of ultrapure water.

## Chart 2

**Current Utilization Efficiency**

While the depicted embodiment has been described in terms of three split cell spacers and four membranes, it will be recognized that additional split cell spacers and membranes are desirable to speed the process. Such additional apparatus would function in substantially the same manner. The unique flexibility of the split-cell design of the present invention allows for relatively simple modifications that achieve high current efficiencies and also high recoveries.

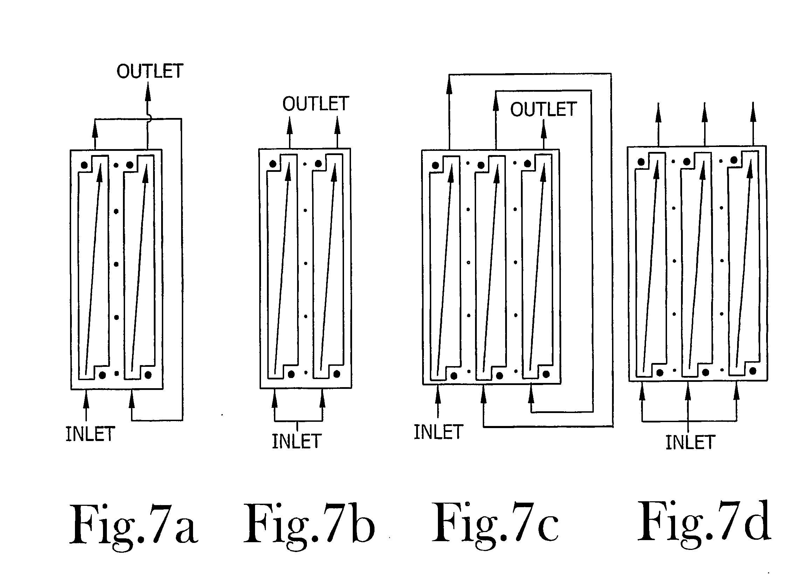

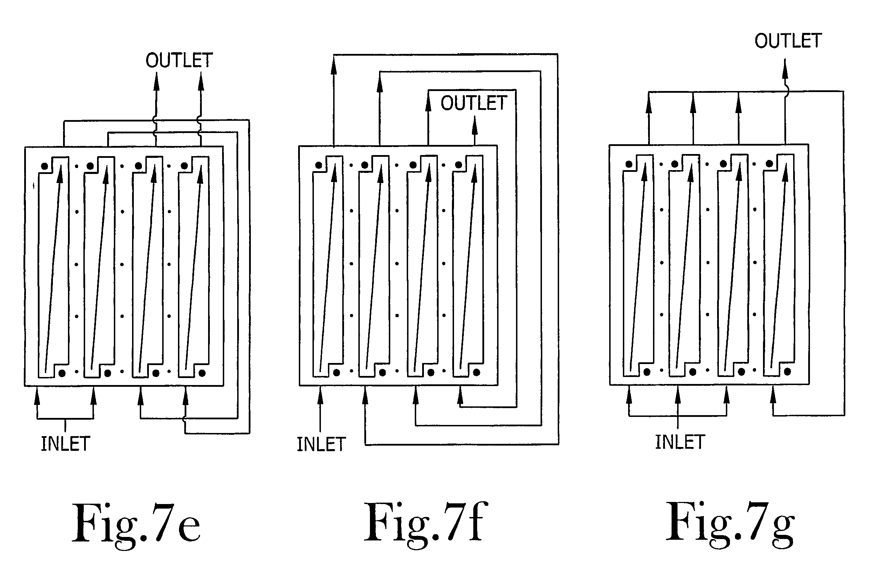

As depicted schematically in Figures 7a to 7g, the split cells may be arranged with more than two cells and the cells may be arranged in a variety of parallel, serial and parallel/serial arrangements. Figure 7a depicts the arrangement described herein above. Figure 7b depicts an arrangement wherein the two split cells are arranged in parallel. Figure 7c depicts a split cell having three apertures that are arranged serially. Figure 7d depicts a split cell having three apertures that are arranged in parallel. Figure 7e depicts a split cell having four apertures that are arranged with two parallel cells arranged serially with another set of parallel cells. Figure 7f depicts a split cell having four apertures that are arranged serially. Figure 7g depicts a split cell having four apertures with three cells arranged in parallel and all three serially feeding the fourth cell. It will be recognized by those skilled in the art that the multiple cells may be arranged in a variety of ways to optimize many different electrodialysis situations.

Controlling C/D ratios to improve current utilization efficiency only applies to saline feeds of up to 20 gm/L. Coincidentally, electro-membrane methods like ED are not as cost effective at higher concentrations compared to other desalination technologies. Nanofiltration, ("NF"), can remove TDS by up to 50%, hardness ions of $SO_4^-$, $MG^{++}$, $CA^{++}$, $HCO_3^-$ and total hardness by up to 98 percent, 95 percent, 89 percent, 77 percent and 94 percent, respectively, and turbidity, microorganisms, by nearly 100 percent. Benefits of using NF-ED as a preteatment to ED include reduced energy consumption for ED, elimination of phased reversal and increased recovery of fresh water output.

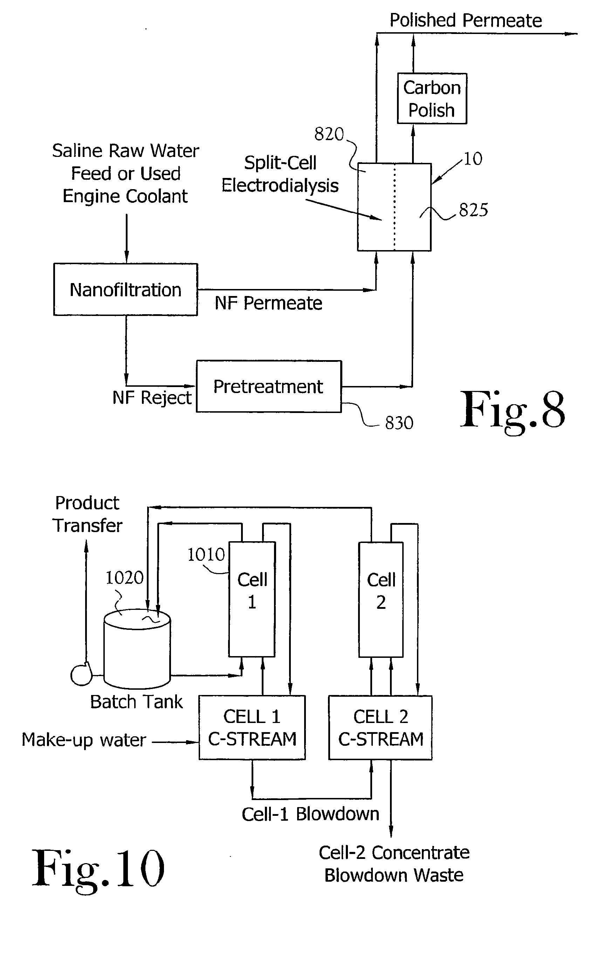

As depicted in Figure 8, the split cell multi-stack **10** of the present invention allows use of nanofiltration **810** in a unique manner as a pretreatment of fluids prior to ED. As those skilled in the art will recognize NF defines membranes with performance between ultrafiltration and reverse osmosis ("RO"). With NF, the molecules readily rejected are on the order of a nanometer or 10 angstroms in size or larger along with multivalent ions. NF membranes with an appropriate molecular-weight cutoff (MWCO) can be used to pass ethylene glycol while retaining color, a portion of multivalent ions, metals and other contaminants. Use of NF results in antifreeze recoveries of 70-90 percent. NF will not retain/reject smaller species like chloride and organic acids as well as larger or multivalent species and is unable to produce an engine coolant of sufficient purity to meet virgin specifications.

While traditional NF has certain drawbacks related to disposal of the reject produced by the nanofiltration, as seen in Figure **8,** the spit-cell electrodialysis stack **10** of the present invention allows for both polishing of the NF permeate and treatment and recovery of the NF reject by feeding the NF permeate through a first, dilute, side **820** of the split cell electrodialysis stack **10** and further by feeding the NF reject through a second, concentrate, side **825** of the split cell electrodialysis stack **10.** If desired, the NF reject can be pretreated **830.** This arrangement allows for the capability of making an on-specification product and increases recovery by conversion of up to 90 percent of the reject into a recoverable glycol/water stream. Although 70 percent more membrane area is required to desalt NF reject than is required to polish the NF permeate, the difference in volume balances the desalting load evenly for both cells. Performance of the NF-ED combination is shown in Example 4 for permeate polishing and Example 5 for treatment of NF-reject.

Example 4

| 2. Parameter | Used Antifreeze | NF Permeate | % Reduction | ED Diluate | % Reduction | %Overall Reduction |
|---|---|---|---|---|---|---|
| Conductivity μS/cm | 3400 | 1658 | 51 | 100 | 93.9 | 97.1 |
| Total Acids | 410 | 378 | 7.8 | 14 | 97.9 | 96.6 |
| Chloride | 71 | 69 | 2.8 | 1 | 98.5 | 98.6 |
| Sodium Nitrite | 190 | 190 | --- | 1 | 99.4 | 99.5 |
| Sodium Nitrate | 1550 | 1548 | --- | 9 | 99.4 | 99.4 |
| Sodium Phosphate | 1290 | 36 | 97 | ND | 100 | 100 |
| Sulfate | 286 | 7 | 97.5 | 1 | 85.7 | 99.7 |
| Sodium Molybdate | 224 | 2 | 99.1 | ND | 100 | 100 |
| Sodium Tetraborate | 654 | 654 | --- | 150 | 77 | 77.1 |
| Sodium Silicate | 78 | 74 | 5.1 | 60 | 18.9 | 23.1 |
| Aluminum | 7.5 | ND | 100 | ND | --- | 100 |
| Copper | 3.4 | ND | 100 | ND | --- | 100 |
| Iron | 23 | ND | 100 | ND | --- | 100 |
| Lead | 4 | ND | 100 | ND | --- | 100 |
| Zinc | 2.4 | ND | 100 | ND | --- | 100 |
| Magnesium | 6 | ND | 100 | ND | --- | 100 |
| Calcium | 15 | ND | 100 | ND | --- | 100 |
| pH | 8.6 | 8.5 | --- | 7.6 | --- | 11.6 |
| All values in ppm unless noted ND- Not Detected | | | | | | |

Example 5

| Parameter | NF Reject | NF-Reject Pretreated | ED Diluate | % Overall Reduction |
|---|---|---|---|---|
| Conductivity, μS/cm | 8600 | 8600 | 250 | 97 |
| Total Acids | 1819 | 1905 | 16 | 99 |
| Chloride | 71 | 73 | 1 | 98.5 |
| Sodium Nitrite | 92 | 92 | 1 | 98.9 |
| Sodium Nitrate | 381 | 413 | ND | 100 |
| Sodium Phosphate | 15054 | 13987 | 214 | 98.5 |
| Sulfate | 1415 | 1353 | 8 | 99.4 |
| Sodium Molybdate | 894 | 867 | 5 | 99.4 |
| Sodium Tetraborate | 958 | 957 | 123 | 87 |
| Sodium Silicate | 248 | 189 | 68 | 72.5 |
| Aluminum | ND | ND | ND | --- |
| Copper | 7 | ND | ND | 100 |
| Iron | 5 | 3 | ND | 100 |
| Lead | 9 | 2 | ND | 100 |
| Zinc | 23 | 22 | 1 | 95.6 |
| Magnesium | 9 | 5 | 3 | 66.6 |
| Calcium | 8 | 7 | 6 | 25 |
| pH | 8.8 | 9.0 | 5.0 | --- |
| % Glycol | 52 | 52 | 46 | --- |
| BT | 73 | 66 | 16 | 78 |
| TT | 414 | 404 | 57 | 86 |
| MBT | ND | ND | ND | --- |
| Benzoic Acid | 5120 | 5025 | 157 | 96.9 |
| 2-ethyl Hexanoic Acid | 5292 | 5241 | 367 | 93 |
| t-butyl Benzoic Acid | 9 | 3 | ND | 100 |
| Appearance | Cloudy, dark amber/green | Dark amber/green | Clear, dark amber | --- |
| All values in ppm unless noted<br>ND- Not Detected | | | | |

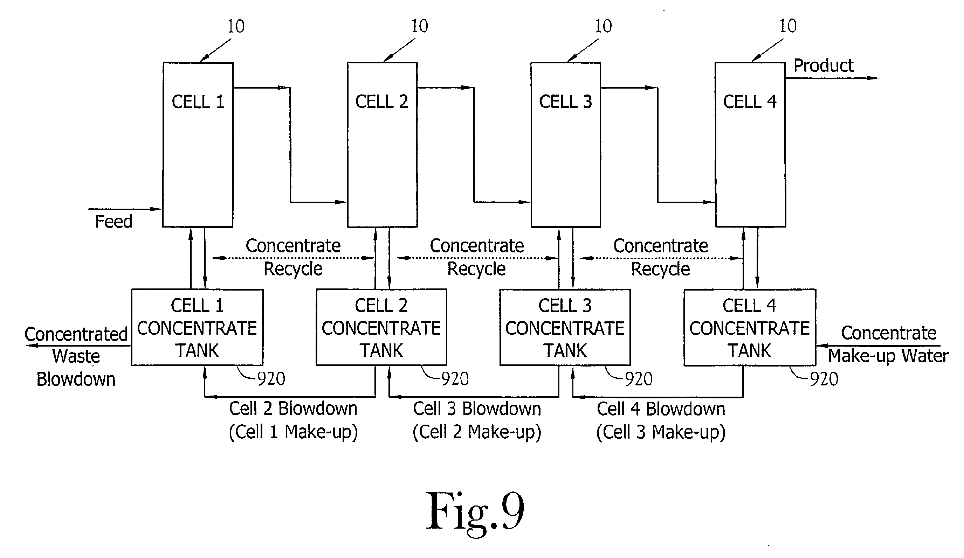

The split cell electrodialysis stack **10** of the present invention can also be utilized in other arrangements. For instance, in one arrangement, illustrated in Figure 9, utilizing continuous countercurrent concentration, a plurality of split-cell electrodialysis stacks **10** are in series, externally manifolded, so that the demineralizing stream makes a single journey through two or more cells and exists as product water. To maintain optimum current utilization efficiency the saline ratio of the C to D stream is maintained throughout the demineralizing fluid path. In order to accomplish this while achieving high recovery, the concentrate stream of each cell is isolated and blowdown from each subsequent cell is drained, via a plurality of cell concentrate tanks **920,** countercurrent to the C stream of the previous cell and ultimately to the lead (or roughing demineralization) cell **910** as illustrated in Figure 9.

The split cell electrodialysis stack of the present invention also allows utilization of a batch-type ED system, illustrated diagrammatically in Figure 10. In a batch-type ED system, the saline liquid is recirculated from a holding tank **1020** through the demineralizing spacers of a first cell **1010** until the desired final purity is obtained. The production rate is, therefore, dependent, in part, on the concentration of dissolved minerals in the feed and on the degree of demineralization desired. The concentration stream is recirculated to reduce the quantity of waste. It will be recognized that recirculation, however, increases the C stream concentration to a level much higher than that of the feed water and as the C to D stream concentration ratio increases, the current utilization efficiency of the process correspondingly decreases. The split-cell design permits high recovery without sacrificing good current utilization efficiency. This is accomplished by isolating the split-cells, such that while the first cell **1010** functions as the product stream demineralizing cell, the second cell **1030** is isolated to function as the concentrating recovery cell for C-stream blowdown from the product demineralizing cell as shown in Figure 10.

Benefits of the processes described herein include a recovery rate in excess of 95%, high throughput and low capital and operating cost. The systems do not generate hazardous by-products, are easy to operate, control and automate, and easy to maintain. Also, studies indicate that the invention is capable of producing a product with extremely low conductivity levels (down to as low as 2.6 $\mu$Mho/cm). Those skilled in the art will recognize that this represents a substantial improvement compared to traditional ED designs, which are typically limited to product with conductivities >30 $\mu$Mho/cm. As a result, the invention would represent a new pretreatment option for production of ultrapure water.

The multi-path split-cell spacer design includes use of a single or multiple central bolts, eliminating the need for an expensive hydraulic clamping assembly for applying central pressure on the stack and providing a uniform force distribution over the gasket area, improving the seals between membranes and improving ion removal efficiency, while also reducing assembly labor time. Expensive machined components are replaced with simpler, lighter components having lower material costs, for a given membrane area assemblies.

In addition to the described use of the method and apparatus to clean used antifreeze, the system may be used to clean and/or recycle: wash water (vehicular, laundry, mop water, trailer/tank washout, textile rinses, metal, aqueous parts cleaners), oil and gas field fluids (glycol base natural gas dehydration fluids, glycol/water heat transfer fluids, amines from treatment of natural gas, produced water), other thermal transfer fluids (secondary coolants from HVAC systems and coolants from ice-skating rinks), cooling water reuse, nuclear wastewater, mixed (nuclear and hazardous) wastewater, hazardous wastewater, desalination of sea or brackish water, drinking water production and pretreatment for ultra-pure water production.

While the present invention has been illustrated by description and while the illustrative embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative apparatus and methods, and illustrative examples shown and described. Accordingly, departures may be made from such details without departing from the spirit or scope of applicant's general inventive concept.

## Claims

1. Electrodialysis system comprising a source of concentrate fluid, a source of dilute fluid, a collector of treated concentrate fluid; a collector of used dilute fluid, an anode (74), a cathode (72), a plurality of generally planar spacers (12, 20, 32, 44, 56), a plurality of membranes (18, 29, 40, 52) interleaved with said spacers to define a plurality of cells providing electrically conductive fluid connection between said anode and said cathode, each of said spacers comprising a gasket defining a first aperture (14, 22, 34, 46, 58) and a second aperture (14', 22', 34', 46', 58'), each of said first and second apertures defining an independent cell between interleaved membranes **characterized in that** one or more bolts (68) extend through said spacers (12, 20, 32, 44, 56) between said first aperture (14, 22, 34. 46. 58) and said second aperture (14', 22', 34', 46', 58').

2. The system of Claim 1 wherein said apertures (14, 14', 22, 22', 34, 34', 46, 46', 58, 58') have the shape of an abbreviated rectangle having squares removed from two diagonally opposed corners.

3. The system of Claim 2 wherein all corners of said apertures are rounded.

4. The system of Claim 1 wherein a conduit (91) provides flow communication between said first aperture (34) and said second aperture (34').

5. The system of Claim 1 wherein said bolts (68) are coated with an electrically resistant material.

6. A cell stack (10) for the electrodialysis system according to any one of claims 1 to 5, comprising said spacers (12, 20, 32, 44, 56) and membranes (18, 29, 40, 52) mounted with threaded bolts (68) between an opposed pair of electrolyte flow distribution end plates (70a, 70b).

7. The cell stack of claim 6, wherein bolts (68) are also arranged around the periphery of said end plates (70a, 70b).

**Patentansprüche**

1. Elektrodialysesystem mit einer Quelle von Konzentrat-Strömungsmittel, einer Quelle von Verdünnungs-Strömungsmittel, einer Auffangeinrichtung für behandeltes Konzentrat-Strömungsmittel; einer Auffangeinrichtung für verwendetes Verdünnungs-Strömungsmittel, einer Anode (74), einer Kathode (72), einer Vielzahl von im Wesentlichen ebenen Abstandshaltern (12, 20, 32, 44, 56), einer Vielzahl von Membranen (18, 9, 40, 52), die mit den Abstandshaltern abwechselnd angeordnet sind, um eine Vielzahl von Zellen zu definieren, die für eine elektrisch leitende Strömungsmittelverbindung zwischen der Anode und der Kathode sorgen, wobei jeder der Abstandshalter eine Dichteinrichtung umfasst, die eine erste Öffnung (14, 22, 34, 46, 58) und eine zweite Öffnung (14', 22', 34', 46', 58') definieren, wobei jede der ersten und zweiten Öffnungen eine unabhängige Zelle zwischen ineinander angeordneten Membranen definiert, **dadurch gekennzeichnet, dass** ein oder mehrere Bolzen (68) sich durch die Abstandshalter (12, 20, 32, 44, 56) zwischen der ersten Öffnung (14, 22, 34, 46, 58) und der zweiten Öffnung (14', 22', 34', 46', 58') erstrecken.

2. System gemäß Anspruch 1, wobei die Öffnungen (14, 14', 22, 22', 34, 34', 46, 46', 58, 58') die Form eines verkürzten Rechtecks aufweisen, bei dem Quadrate von zwei diagonal gegenüberliegenden Ecken entfernt wurden.

3. System nach Anspruch 2, wobei alle Ecken der Öffnungen abgerundet sind.

4. System nach Anspruch 1, wobei eine Leitung (91) eine Strömungsmittelverbindung zwischen der ersten Öffnung (34) und der zweiten Öffnung (34') schafft.

5. System nach Anspruch 1, wobei die Bolzen (68) mit einem elektrischen Widerstandsmaterial beschichtet sind.

6. Zellenstapel (10) für das Elektrodialysesystem gemäß einem der Ansprüche 1 bis 5, bei dem die Abstandshalter (12, 20, 32, 44, 56) und die Membranen (18, 29, 40, 52) mit Gewindebolzen (68) zwischen einem gegenüberliegenden Paar von Endplatten (70a, 70b) zum Verteilen der Elektrolytströmung montiert sind.

7. Zellenstapel nach Anspruch 6, wobei Bolzen (68) auch um den Umfang der Endplatten (70a, 70b) herum angeordnet sind.

**Revendications**

1. Système d'électrodialyse comprenant une source de fluide concentré, une source de fluide dilué, un collecteur de fluide concentré traité ; un collecteur de fluide dilué usagé, une anode (74), une cathode (72), une pluralité de séparateurs sensiblement plats (12, 20, 32, 44, 56), une pluralité de membranes (18, 29, 40, 52) intercalées avec lesdits séparateurs afin de définir une pluralité de cellules établissant une liaison fluidique électriquement conductrice entre ladite anode et ladite cathode, chacun desdits séparateurs comprenant un joint définissant une première ouverture (14, 22, 34, 46, 58) et une seconde ouverture (14', 22', 34', 46', 58'), chacune desdites première et seconde ouvertures définissant une cellule indépendante entre les membranes intercalées, **caractérisé en ce qu'**un ou plusieurs boulons (68) s'étendent au travers desdits séparateurs (12, 20, 32, 44, 56) entre ladite première ouverture (14, 22, 34, 46, 58) et ladite seconde ouverture (14', 22', 34', 46', 58').

2. Système selon la revendication 1, dans lequel lesdites ouvertures (14, 14', 22, 22', 34, 34', 46, 46', 58, 58') ont la forme d'un rectangle raccourci auquel des carrés ont été enlevés au niveau de deux coins diagonalement opposés.

3. Système selon la revendication 2, dans lequel tous les coins desdites ouvertures sont arrondis.

4. Système selon la revendication 1, dans lequel une conduite (91) établit une communication fluidique entre ladite première ouverture (34) et ladite seconde ouverture (34').

5. Système selon la revendication 1, dans lequel lesdits boulons (68) sont revêtus d'un matériau électriquement résistant.

**6.** Empilement de cellules (10) pour le système d'électrodialyse selon l'une quelconque des revendications 1 à 5, comprenant lesdits séparateurs (12, 20, 32, 44, 56) et lesdites membranes (18, 29, 40, 52) monté(e)s à l'aide de boulons filetés (68) entre une paire opposée de plaques terminales de distribution du flux d'électrolyte (70a, 70b).

**7.** Empilement de cellules selon la revendication 6, dans lequel les boulons (68) sont également disposés autour de la périphérie desdites plaques terminales (70a, 70b).

Fig.1

EP 1 476 247 B1

Fig.4

Fig.3

Fig.2

Fig.5

EP 1 476 247 B1

Fig.6

Fig.7a    Fig.7b    Fig.7c    Fig.7d

OUTLET

OUTLET

OUTLET

INLET

INLET

INLET

Fig.7e        Fig.7f        Fig.7g

EP 1 476 247 B1

EP 1 476 247 B1

Fig.9

Polished Permeate

Carbon
Polish

820

Split-Cell
Electrodialysis

10

825

Saline Raw Water
Feed or Used
Engine Coolant

Nanofiltration

NF Permeate

NF Reject

Pretreatment

830

# Fig.8

Product
Transfer

1010

Cell
1

Cell
2

1020

Batch Tank

Make-up water

CELL 1
C-STREAM

CELL 2
C-STREAM

Cell-1 Blowdown

Cell-2 Concentrate
Blowdown Waste

# Fig.10

**EP 1 476 247 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5066375 A
- WO 9532052 A
- US 5868930 A

### Non-patent literature cited in the description

- Design and Cost Estimates. **STRATHMANN, H.** Membrane Handbook. Van Nostrand Reinhold, 1992, 246-254